(19) Europäisches Patentamt
European Patent Office
Office européen des brevets

(11) **EP 4 273 585 A1**

(12) **EUROPÄISCHE PATENTANMELDUNG**

(43) Veröffentlichungstag:
**08.11.2023  Patentblatt 2023/45**

(51) Internationale Patentklassifikation (IPC):
*G01S 19/39* (2010.01)    *G01C 21/00* (2006.01)

(21) Anmeldenummer: 23169488.6

(52) Gemeinsame Patentklassifikation (CPC):
**G01S 19/396; G01C 21/00**

(22) Anmeldetag: **24.04.2023**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **04.05.2022  DE 102022204409**

(71) Anmelder: **Robert Bosch GmbH**
**70442 Stuttgart (DE)**

(72) Erfinder:
• **Traeff, Gustav**
  **22363 Lund (SE)**
• **Andren, Jakob**
  **22363 Lund (SE)**
• **Andersson, Linnea**
  **22363 Lund (SE)**

(54) **VERFAHREN UND VORRICHTUNG ZUM ERMITTELN EINER ABSTELLPOSITION EINES FAHRRADES**

(57)    Die vorliegende Erfindung betrifft ein Verfahren und eine Vorrichtung zum Ermitteln einer Abstellposition eines Fahrzeuges. Dabei erfolgt ein Erfassen von ersten Positionen (11, 12, 13) des Fahrzeuges in zeitlich aufeinanderfolgender Reihenfolge durch einen GNSS-Empfänger und Speichern dieser Positionen in einem Speicher, wobei für jede der Positionen ein zugehöriger erster Positionierungsfehler (15, 16, 17) hinterlegt wird, ein Erfassen einer letzten Position (14) des Fahrzeuges mit einem zugehörigen letzten Positionierungsfehler (18) durch den GNSS-Empfänger in Reaktion darauf, dass das Fahrzeug in einen abgestellten Zustand übergeht, und ein Ermitteln der Abstellposition des Fahrzeuges, wobei eine der in dem Speicher gespeicherten ersten Positionen des Fahrzeuges als Abstellposition des Fahrzeuges ermittelt wird, wenn deren Abstand zu der letzten Position zuzüglich dem zugehörigen ersten Positionierungsfehler kleiner als der letzte Positionierungsfehler oder als ein mit einem vorgegeben Skalierungsfaktor skalierter letzter Positionierungsfehler ist.

Fig. 2

EP 4 273 585 A1

**Beschreibung**

Stand der Technik

Die vorliegende Erfindung betrifft ein Verfahren zum Ermitteln einer Abstellposition eines Fahrzeuges.
Durch elektrische Fahrräder ist eine effiziente und komfortable Möglichkeit der Fortbewegung gegeben. Dabei sind elektrische Fahrräder oftmals vergleichsweise teuer und sind somit auch ein beliebtes Ziel für Diebe.
Um einen Diebstahl von elektrischen Fahrrädern zu verhindern oder das Fahrrad nach einem Diebstahl zurückzuerlangen, sind elektrische Fahrräder oftmals mit Positionierungssystemen ausgestattet, die insbesondere einen GNSS-Empfänger umfassen. So kann entweder eine aktuelle Position des Fahrzeuges nach einem Diebstahl ermittelt werden oder es kann detektiert werden, wenn das Fahrrad unerlaubt von einer Abstellposition entfernt wird. In jedem Fall ist es erstrebenswert, eine Abstellposition des Fahrzeuges möglichst genau zu detektieren.

Offenbarung der Erfindung

Das erfindungsgemäße Verfahren zum Ermitteln einer Abstellposition eines Fahrzeuges umfasst ein Erfassen von ersten Positionen des Fahrzeuges in zeitlich aufeinanderfolgender Reihenfolge durch einen GNSS-Empfänger und Speichern dieser Position in einem Speicher, wobei für jede der ersten Positionen ein zugehöriger erster Positionierungsfehler hinterlegt wird, ein Erfassen einer letzten Position des Fahrzeuges mit einem zugehörigen letzten Positionierungsfehler durch den GNSS-Empfänger in Reaktion darauf, dass das Fahrzeug in eine abgestellten Zustand übergeht, und ein Ermitteln der Abstellposition des Fahrzeuges, wobei eine der in dem Speicher gespeicherten ersten Positionen des Fahrzeuges als Abstellposition des Fahrzeuges ermittelt wird, wenn deren Abstand zu der letzten Position zuzüglich dem zugehörigen ersten Positionierungsfehler kleiner als der letzte Positionierungsfehler oder als ein mit einem vorgegebenen Skalierungsfaktor skalierter letzter Positionierungsfehler ist.
Die erfindungsgemäße Vorrichtung zum Ermitteln einer Abstellposition eines Fahrzeuges umfasst eine Steuereinheit, welche dazu eingerichtet ist, erste Positionen des Fahrzeuges in zeitlich aufeinanderfolgender Reihenfolge durch einen GNSS-Empfänger zu erfassen und diese Position in einem Speicher zu speichern, wobei für jede der ersten Positionen ein zugehöriger erster Positionierungsfehler hinterlegt wird, eine letzte Position des Fahrzeuges mit einem zugehörigen letzten Positionierungsfehler durch den GNSS-Empfänger in Reaktion darauf zu erfassen, dass das Fahrzeug in einen abgestellten Zustand übergeht, und die Abstellposition des Fahrzeuges zu ermitteln, wobei eine der in dem Speicher gespeicherten ersten Position des Fahrzeuges als Abstellposition des Fahrzeuges ermittelt wird, wenn deren Abstand zu der letzten Position zuzüglich dem zugehörigen ersten Positionierungsfehler kleiner als der letzte Positionierungsfehler oder als ein mit einem vorgegebenen Skalierungsfaktor skalierten letzter Positionierungsfehler ist.
Das Fahrzeug ist bevorzugt ein elektrisches Fahrrad. Der GNSS-Empfänger ist insbesondere ein GPS-Empfänger, ein Glonass-Empfänger oder ein Galileo-Empfänger. Durch solche GNSS-Empfänger wird kontinuierlich eine aktuelle Position des GNSS-Empfängers ermittelt und bereitgestellt. Die von dem GNSS-Empfänger bereitgestellten Positionen werden als erste Positionen erfasst. Das Erfassen der ersten Positionen erfolgt bei einem regulären Betrieb des Fahrzeuges.
Typischerweise wird von einem GNSS-Empfänger auch eine Information bereitgestellt, die angibt, wie präzise eine jeweils erfasste Position ist. Diese Information wird als Positionierungsfehler betrachtet und wird bevorzugt als Distanz bereitgestellt oder mittels einer entsprechenden Umrechnungsformel in eine Distanz umgerechnet. Der Positionierungsfehler gibt also an, welchen Abstand von einer erfassten Position das Fahrzeug maximal entfernt ist. Der Positionierungsfehler ist somit ein Wert, der typischerweise dann ansteigt, wenn eine Empfangsqualität des GNSS-Empfängers absinkt. So hat ein GNSS-Empfänger auf freier Fläche typischerweise einen vergleichsweisen guten Empfang und der Positionierungsfehler ist vergleichsweise klein. Wird der GNSS-Empfänger in ein geschlossenes Gebäude bewegt, so ist der Empfang des GNSS-Empfängers vergleichsweise schlecht und der Positionierungsfehler steigt an.
Es erfolgt zudem ein Erfassen einer letzten Position des Fahrzeuges. Die letzte Position wird ebenfalls mittels des GNSS-Empfängers erfasst, wobei dies in gleicher Weise zu den ersten Positionen erfolgt. Die letzte Position wird jedoch nicht zwingend in denselben Speicher gespeichert, in dem die ersten Positionen hinterlegt sind. Für die letzte Position wird der letzte Positionierungsfehler hinterlegt. Die letzte Position wird dann erfasst, wenn das Fahrzeug in einen abgestellten Zustand übergeht. Ein abgestellter Zustand ist dabei ein Zustand, bei dem davon ausgegangen wird, dass zunächst keine weitere Bewegung des Fahrzeuges erfolgt. Grundsätzlich ist also davon auszugehen, dass sich das Fahrzeug zu einem Zeitpunkt des Erfassens der letzten Position an der Abstellposition befindet. Allerdings ist dabei der Positionierungsfehler zu berücksichtigen, welcher dazu führt, dass die erfasste letzte Position nicht zwingend exakt die Position ist, an der das Fahrzeug sich tatsächlich befindet. In einigen Fällen ist es vorteilhaft, eine der zuvor erfassten ersten Positionen als Abstellposition zu ermitteln, da dies zu einer höheren Präzision führt, als das direkte Nutzen der letzten Position des Fahrzeuges als Abstellposition.
Entsprechend erfolgt ein Ermitteln der Abstellposition des Fahrzeuges basierend auf den ersten Positionen und der letzten Position sowie den zugehörigen Positionierungsfehlern. Es wird dabei eine der ersten Positionen als Abstellposition des Fahrzeuges ermittelt, wenn deren Abstand zu der letzten Position zuzüglich dem zugehörigen ersten Positionierungsfehler kleiner als der vorgegebene Positionierungsfehler ist. Optional wird der letzte Positionierungsfehler dabei zuvor mit einem Skalierungsfaktor skaliert. Dadurch kann eine Gewichtung der letzten Position des Fahrzeuges erfolgen. Durch die Betrachtung der Positionierungsfehler allein kann bereits ermittelt werden, welche der ersten Positionen eine besonders hohe Genauigkeit aufweist. Durch den Abstand der jeweiligen Positionen zu der letzten Position wird berücksichtigt, dass das Fahrzeug sich seit dem Erfassen dieser Position und das Übergehen in den abgestellten Zustand weiterbewegt hat. Durch die Kombination des Positionierungsfehlers und der Abstand zu der letzten Position kann gewährleistet werden, dass eine besonders präzise Position des Fahrzeuges als Abstellposition gewählt wird.

Das Verfahren ist vorteilhaft, da insbesondere Fahrräder kurz vor einem Abstellen in geschlossene Gebäude bewegt werden. So ist es oftmals üblich, dass Fahrräder in einem Fahrradkeller abgestellt werden. Somit steigt kurz vor dem Abstellen des Fahrrades der Positionierungsfehler an und die Präzision für das Detektieren einer aktuellen Position fällt ab. Gerade in solchen Fällen ist es besonders vorteilhaft, wenn eine früher ermittelte Position als Abstellposition des Fahrzeuges gewählt wird, insbesondere eine Position, die durch den GNSS-Empfänger erfasst wurde, kurz bevor das Fahrzeug in das Gebäude bewegt wurde. Ähnliche Situationen ergeben sich auch für andere Fahrzeuge, ebenfalls für Pkws, welche beispielsweise in eine Tiefgarage bewegt werden.

Es wird somit ein Verfahren und eine Vorrichtung geschaffen, durch welche eine Abstellposition eines Fahrzeuges, nachdem dieses bewegt wurde, zuverlässig ermittelt wird. Positionen werden durch den GNSS-Empfänger erfasst, welcher bevorzugt in eine Steuereinheit integriert ist.

Die Unteransprüche zeigen bevorzugte Weiterbildungen der Erfindung.

Bevorzugt wird bei dem Ermitteln der Abstellposition des Fahrzeuges die letzte Position als Abstellposition des Fahrzeuges ermittelt, wenn für alle gespeicherten ersten Positionen gilt, dass deren Abstand zu der letzten Position zuzüglich des jeweiligen Positionierungsfehlers größer ist als der letzte Positionierungsfehler. So können auch Situationen auftreten, in denen die letzte Position die Abstellposition des Fahrzeuges am besten beschreibt. Dies ist besonders dann der Fall, wenn die ersten Positionen entweder alle einen besonders großen Positionierungsfehler und/oder einen großen Abstand zu der letzten Position aufweisen. In der Praxis sind damit Szenarien abgedeckt, in denen der GNSS-Empfänger zu dem Zeitpunkt, in dem das Fahrzeug in den abgestellten Zustand übergeht, einen guten Empfang hat und eine letzte Position mit geringem Positionierungsfehler empfängt.

Auch ist es vorteilhaft, wenn diejenige der gespeicherten ersten Positionen des Fahrzeuges als Abstellposition des Fahrzeuges ermittelt wird, für die eine Summe aus deren Abstand zu der letzten Position zuzüglich dem zugehörigen ersten Positionierungsfehler am kleinsten ist. Stehen somit mehrere erste Positionen zur Auswahl, um diese als Abstellposition des Fahrzeuges zu ermitteln, so ist es vorteilhaft, wenn die Position gewählt wird, die besonders nah an der letzten Position liegt und einen möglichst geringen Positionierungsfehler aufweist. Der Abstand und der Positionierungsfehler können dabei in gleicher Weise gewertet werden.

Bevorzugt wird eine durch den GNSS-Empfänger erfasste Position des Fahrzeuges nur dann als erste Position in einem Speicher gespeichert, wenn einer der Position zugehörige Geschwindigkeit des Fahrzeugs geringer als ein vorgegebener Geschwindigkeitsschwellenwert ist. Somit werden Positionen, an denen das Fahrzeug eine vergleichsweise hohe Geschwindigkeit aufweist nicht berücksichtigt. Dies ist daher vorteilhaft, da eine solche Position aufgrund der vorliegenden Geschwindigkeit voraussichtlich weit von einer tatsächlichen Abstellposition entfernt ist. Die Geschwindigkeit wird entweder mittels des GNSS-Empfängers oder basierend auf einem alternativen Geschwindigkeitssensor ermittelt.

Bevorzugt wird eine durch den GNSS-Empfänger erfasste Position des Fahrzeuges nur dann als erste Position in einem Speicher gespeichert, wenn eine der Position zugehörige Geschwindigkeit des Fahrzeugs geringer als eine Geschwindigkeit ist, welcher einer zuvor durch den GNSS-Empfänger erfassten Position zugehörig ist. Eine neu erfasste Position wird somit nur dann gespeichert, wenn das Fahrzeug sich verlangsamt und damit ein Abstellvorgang zu erwarten ist.

Auch ist es vorteilhaft, wenn der Speicher eine limitierte Anzahl von Speicherplätzen aufweist. Die Anzahl der Speicherplätze ist dabei bevorzugt eine vordefinierte Anzahl von Speicherplätzen. Dabei ist die limitiert Anzahl bevorzugt so gewählt, dass die darin gespeicherten ersten Positionen innerhalb eines vordefinierten Zeitintervalls bei dem Abstellen des Fahrzeuges analysiert werden können.

Es ist vorteilhaft, wenn eine neu erfasste erste Position mit ihrem zugehörigen Positionierungsfehler nicht in dem Speicher gespeichert wird, wenn für alle bis dahin gespeicherten ersten Positionen gilt, dass deren Abstand zu der neu erfassten Position zuzüglich des jeweiligen ersten Positionierungsfehlers der bis dahin gespeicherten ersten Positionen kleiner ist als der letzte Positionierungsfehler der neu erfassten Position. So werden nicht alle erfassten ersten Positionen in dem Speicher gespeichert. Beispielsweise werden solche Positionen nicht gespeichert, die bereits zu dem Zeitpunkt des Speicherns die aktuelle Position des Fahrzeuges schlechter beschreiben als die bereits darin gespeicherten Positionen. Dies kann dadurch detektiert werden, dass die zuvor gespeicherten ersten Positionen mit dem Positionierungsfehler der neu erfassten Position verglichen werden.

Auch ist es vorteilhaft, wenn, falls eine in dem Speicher gespeicherte erste Position durch eine neu erfasste erste Position überschrieben wird, diejenige der gespeicherten ersten Positionen überschrieben wird, für die eine Summe aus deren Abstand zu der neu erfassten ersten Position zuzüglich dem zugehörigen ersten Positionierungsfehler am größten ist. Es wird somit die Position ausgewählt, die eine aktuelle Position des Fahrzeuges am wenigsten robust oder am schlechtesten beschreibt. Dies ist typischerweise die Position, die den größten Abstand zu der zuletzt erfassten Position und den größten Positionierungsfehler bzw. die größte Summe daraus aufweist. Es wird somit bei einem Speichern der ersten Positionen immer die Position in dem Speicher überschrieben, welche die aktuelle Position am schlechtesten beschreibt.

Auch ist es vorteilhaft, wenn eine erste Position in dem Speicher nur dann durch eine neu erfasste erste Position überschrieben wird, wenn der Speicher keinen freien Speicherplatz aufweist. Gerade zu einem Beginn des Verfahrens weist der Speicher typischerweise freie Speicherplätze auf, welche zunächst gefüllt werden, bevor existierende Speicherplätze überschrieben werden.

Auch ist es vorteilhaft, wenn der Skalierungsfaktor ein Wert zwischen 0 und 1 ist. Somit kann eine Gewichtung der letzten Position bei dem Ermitteln der Abstellposition erhöht werden. Alternativ oder zusätzlich werden die ersten Positionen mit einem weiteren Skalierungsfaktor beaufschlagt, wobei der weitere Skalierungsfaktor bevorzugt zeitabhängig ist und die Summe aus dem ersten Positionierungsfehler und dem Abstand der ersten Position zu der letzten Position mit dem weiteren Skalierungsfaktor zeitabhängig vergrößert wird. Das bedeutet, dass besonders alte erste Positionen als weniger relevant angesehen werden und weniger wahrscheinlich als Abstellposition des Fahrzeuges gewählt werden.

Auch ist es vorteilhaft, wenn erkannt wird, dass das Fahrzeug in den abgestellten Zustand übergeht, wenn eine Geschwindigkeit des Fahrzeuges auf 0 km/h absinkt, das Fahrzeug deaktiviert wird oder eine Betriebskomponente des Fahrzeuges entfernt wird. Die Betriebskomponente ist beispielsweise eine Batterie oder eine Steuereinheit des Fahrzeuges. Auch ist es vorteilhaft, wenn erkannt wird, dass das Fahrzeug in den abgestellten Zustand übergeht, wenn detektiert wird, dass über ein vordefiniertes Zeitintervall hinweg eine Geschwindigkeit des Fahrzeuges gleich 0 km/h ist.

Kurze Beschreibung der Zeichnungen

Nachfolgend werden Ausführungsbeispiele der Erfindung unter Bezugnahme auf die begleitende Zeichnung im Detail beschrieben. In der Zeichnung ist:

Figur 1    eine schematische Darstellung eines Fahrzeuges 1 mit einer Vorrichtung zum Ermitteln einer Abstellposition des Fahrzeuges und

Figur 2    eine schematische Darstellung einer Bewegung des Fahrzeuges vor einem Abstellen des Fahrzeuges.

Ausführungsformen der Erfindung

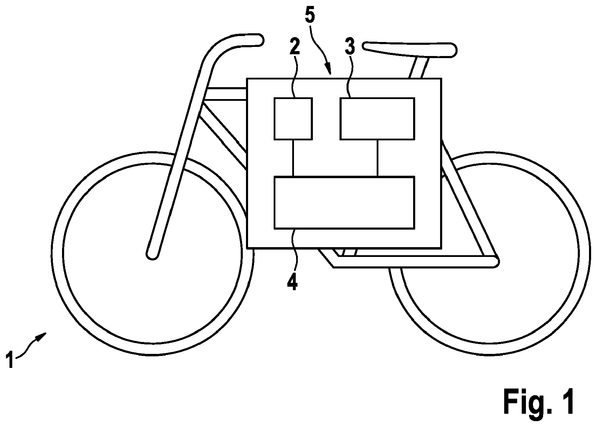

Figur 1 zeigt ein Fahrzeug 1 mit einer daran angeordneten Vorrichtung zum Ermitteln einer Abstellposition des Fahrzeuges 1. Das Fahrzeug 1 ist dabei ein elektrisches Fahrrad. Die Vorrichtung umfasst eine Steuereinheit 4, welche dazu eingerichtet ist, das erfindungsgemäße Verfahren auszuführen.

Die Vorrichtung umfasst ferner einen GNSS-Empfänger 2, welche dazu geeignet ist, aktuelle Positionen des Fahrzeuges 1 zu erfassen und diese der Steuereinheit 4 für eine weitere Verarbeitung bereitzustellen. Der GNSS-Empfänger 2 stellt dabei neben einer erfassten Position auch jeweils einen zugehörigen Positionierungsfehler bereit, welcher beschreibt, wie weit die erfasste Position maximal von einer tatsächlichen Position des GNSS-Empfängers 2 abweicht. Der Positionierungsfehler ist somit ein Parameter, welcher eine Genauigkeit einer erfassten Position beschreibt.

Der GNSS-Empfänger 2 weist eine Abtastfrequenz von 1/60 bis 10 Hz auf.

Die Vorrichtung umfasst ferner einen Speicher 3, welcher eine beschränkte Anzahl von Speicherplätzen aufweist. So weist der Speicher 3 beispielsweise hinreichend Speicherplätze auf, um 5 bis 200 erfasste Positionen des Fahrzeuges 1 mit zugehörigen ersten Positionierungsfehlern zu speichern.

Wird das Fahrzeug 1 in Betrieb genommen, so werden von dem GNSS-Empfänger 2 kontinuierlich aktuelle Positionen des Fahrzeuges 1 erfasst. Die Abtastfrequenz des GNSS-Empfängers 2 für das Erfassen von Positionen liegt typischerweise bei 1Hz, kann jedoch in einem Bereich von 1 - 60Hz liegen. Eine Position ist durch eine longitudinale und eine latitudinale Komponente beschrieben.

Diese Positionen des Fahrzeuges 1 werden als erste Positionen von der Steuereinheit 5 in den Speicher 3 geschrieben. Dabei wird für jede der ersten Positionen 11, 12, 13 ein jeweils zugehöriger erster Positionierungsfehler 15, 16, 17 in dem Speicher 3 hinterlegt. Es werden neu erfasste Positionen so lange in den Speicher 3 als erste Positionen 11, 12, 13 gespeichert, bis der Speicher 3 gefüllt ist.

Eine durch den GNSS-Empfänger erfasste Position des Fahrzeuges nur dann als erste Position in dem Speicher gespeichert wird, wenn einer der Position zugehörige Geschwindigkeit des Fahrzeugs geringer als ein vorgegebener Geschwindigkeitsschwellenwert ist.

Auch wird eine durch den GNSS-Empfänger erfasste Position des Fahrzeuges nur dann als erste Position in dem Speicher gespeichert wird, wenn eine der Position zugehörige Geschwindigkeit des Fahrzeugs 1 geringer als eine Geschwindigkeit ist, welche einer unmittelbar zuvor durch den GNSS-Empfänger erfassten Position zugehörig ist, also wenn das Fahrzeug gebremst wird oder sich verlangsamt.

Wird bei dem weiteren Betrieb des Fahrzeuges 1 eine weitere Position erfasst, also eine neu erfasste erste Position von dem GNSS-Empfänger 2 bereitgestellt, so wird geprüft, ob diese in dem Speicher 3 gespeichert werden soll. Dabei wird die neu erfasste erste Position nicht in dem Speicher 3 gespeichert, wenn diese eine aktuelle Position des Fahrzeuges 1 weniger präzise beschreibt als alle bereits darin gespeicherten ersten Positionen 11, 12, 13. Um dies zu ermitteln, werden alle bis dahin gespeicherten ersten Positionen 11, 12, 13 betrachtet und ermittelt, ob deren Abstand zu der neu erfassten Position zuzüglich des jeweiligen ersten Positionierungsfehlers 15, 16, 17 der bis dahin gespeicherten ersten Positionen 11, 12, 13 kleiner ist als der letzte Positionierungsfehler der neu erfassten Position. So wird der letzte Positionierungsfehler der neu erfassten Position als Vergleichswert herangezogen.

Für jede in dem bis dahin in dem Speicher 3 gespeicherten ersten Positionen wird somit folgender Prüfvorgang ausgeführt:

$$\text{Fehler(i)} < \text{Fehler(k)} + \text{Abstand zwischen Position i und Position k}$$

Der Wert Fehler(x) beschreibt dabei den zugehörigen Positionierungsfehler einer Position x. Dabei ist x = i für die neu erfasste erste Position und k definiert einen einen Index der gespeicherten ersten Positionen 11, 12, 13. Es wird jede der gespeicherten ersten Positionen 11, 12, 13 des Fahrzeuges 1 betrachtet und geprüft, ob diese besser oder schlechter als eine neu erfasste erste Position ist. Ist die zuvor genannte Bedingung erfüllt, so wird die neu erfasste erste Position in dem Speicher 3 gespeichert und überschreibt die zuvor gespeicherte erste Positionen 11, 12, 13, für welche die Bedingung erfüllt ist. Ist die zuvor genannte Bedingung nicht erfüllt, so wird die neu erfasste erste Position verworfen.

Soll die neu erfasste erste Position in den Speicher 3 geschrieben werden, so ist es vorteilhaft, wenn durch diese neu erfasste Position eine solche bereits gespeicherte erste Position 11, 12, 13 überschrieben wird, welche die aktuelle Position des Fahrzeuges 1 am schlechtesten beschreibt. Dazu wird diejenige der gespeicherten ersten Positionen 11, 12, 13 überschrieben, für die eine Summe aus dem Abstand zu der neu erfassten Position 14 zuzüglich dem zugehörigen ersten Positionierungsfehler 15, 16, 17 am größten ist.

Wird das Fahrzeug 1 nach einem Abstellen erstmalig bewegt, so kann es vorkommen, dass in dem Speicher 3 keine ersten Positionen gespeichert sind. Es ist daher sinnvoll, dass eine erste Position 11, 12, 13 in dem Speicher nur dann durch eine neu erfasste erste Position überschrieben wird, wenn der Speicher 3 keine freien Speicherplätze mehr aufweist. Optional ist es auch vorteilhaft, wenn für neu erfasste erste Positionen nur dann ein Speichern in dem Speicher 3 in Betracht gezogen wird, wenn eine Geschwindigkeit des Fahrzeuges 1 über einen vordefinierten Schwellenwert liegt. So ist es insbesondere nicht notwendig, dass kontinuierlich neue Positionen in den Speicher 3 geschrieben werden, wenn das Fahrzeug 1 steht. Somit wird auch vermieden, dass bei einer geringen Bewegung oder einem Stillstand des Fahrzeuges 1 unmittelbar vor einem Abstellen des Fahrzeuges 1 alle zuletzt gespeicherten ersten Positionen 11, 12, 13 möglicherweise überschrieben werden, bevor im Folgenden eine Abstellposition des Fahrzeuges 1 ermittelt wird.

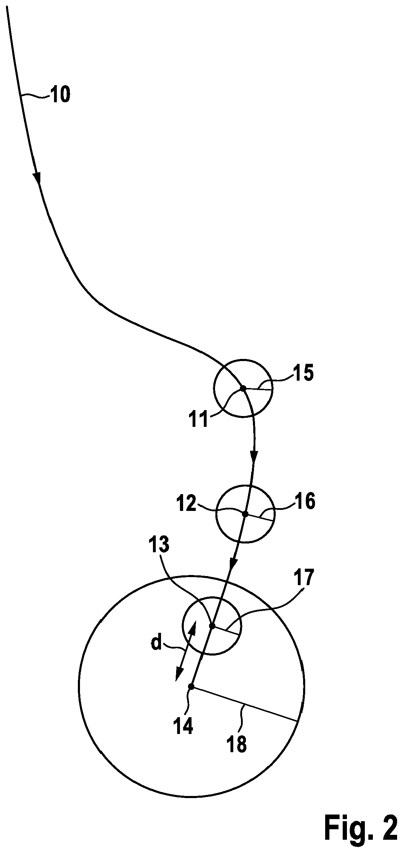

Wird detektiert, dass das Fahrzeug 1 abgestellt wird, was beispielsweise dadurch erfolgt, dass erkannt wird, dass eine Geschwindigkeit des Fahrzeuges auf 0 km/h absinkt, das Fahrzeug deaktiviert wird oder eine Betriebskomponente des Fahrzeuges 1 entfernt wird, also beispielsweise eine Batterie oder ein Tachometer des Fahrzeuges 1 abgenommen wird, so wird eine letzte Position 14 des Fahrzeuges 1 erfasst. Dabei wird ebenfalls ein zugehöriger letzter Positionierungsfehler 18 erfasst, welcher der letzten Position 14 zugehörig ist. Auch dies erfolgt durch den GNSS-Empfänger 2 in entsprechender Weise wie das Erfassen der ersten Positionen 11, 12, 13. Die letzte Position 14 und der letzte Positionierungsfehler 18 werden jedoch nicht in den Speicher 3 geschrieben, sondern werden für ein Ermitteln der Abstellposition des Fahrzeuges 1 herangezogen. Dies sei im Folgenden beispielhaft anhand des beispielhaften Szenarios aus Figur 2 beschrieben.

Figur 2 zeigt eine Trajektorie 10 entlang derer das Fahrzeug 1 vor einem Abstellen des Fahrzeuges 1 bewegt wurde. Das Fahrzeug 1 wurde an der letzten Position 14 abgestellt. Zuvor wurden ersten Positionen 11, 12, 13 erfasst, während das Fahrzeug 1 entlang der Trajektorie 10 bewegt wurde. Jede der erfassten Positionen, also sowohl die ersten Positionen 11, 12, 13 als auch die letzte Position 14 weist einen Positionierungsfehler auf. So weisen die in Figur 2 dargestellten ersten Positionen 11, 12, 13 die ersten Positionierungsfehler 15, 16, 17 auf. Die letzte Position 14 weist den letzten Positionierungsfehler 18 auf. Die Positionierungsfehler sind in Figur 2 als Kreise dargestellt, welche die jeweils zugehörige Position umlaufen. Dadurch wird illustriert, dass durch den Positionierungsfehler eine Ungenauigkeit definiert ist, durch welche beschrieben wird, wie weit eine tatsächliche von dem GNSS-Empfänger 2 erfasste Position von der tatsächlichen Position des Fahrzeuges 1 abweichen kann. Am Beispiel der letzten Position 14 bedeutet dies, dass das Fahrzeug 1 sich nicht zwingend genau an der durch den GNSS-Empfänger 2 erfassten letzten Position 14 befindet, sich jedoch mit hoher Wahrscheinlichkeit innerhalb des durch den letzten Positionierungsfehlers 18 definierten Kreises befindet. Dies gilt in entsprechender Weise auch für die ersten Positionen 11, 12, 13.

Bei dem in Figur 2 dargestellten Szenario wurde das Fahrzeug 1 entlang der Trajektorie 10 bewegt und kurz vor einem Übergehen des Fahrzeuges 1 in den abgestellten Zustand in ein geschlossenes Gebäude bewegt. Daher ergibt sich, dass der letzte Positionierungsfehler 18 deutlich größer ist als die ersten Positionierungsfehler 15, 16, 17 der ersten Positionen 11, 12, 13. Insbesondere ist dabei ersichtlich, dass die zuletzt erfasste erste Position 13 die Abstellposition des Fahrzeuges 1 genauer beschreiben kann als die letzte Position 14, da die letzte Position 14 einen besonders hohen letzten Positionierungsfehler 18 aufweist. So lässt es die erfasste letzte Position 14 mit dem zugehörigen letzten Positionierungsfehler 18 zu, dass das Fahrzeug 1 theoretisch sogar entlang der Trajektorie 10 vor der zuletzt erfassten ersten Position 13 befindlich ist, da nicht sicher davon ausgegangen werden kann, dass das Fahrzeug 1 sich genau an der detektieren letzten Position 14 befindet.

Um die Abstellposition des Fahrzeuges 1 zu ermitteln, wird eine der gespeicherten ersten Positionen 11, 12, 13 als Abstellposition des Fahrzeuges 1 ermittelt, wenn deren Abstand zu der letzten Position 14 zuzüglich den zugehörigen ersten Positionierungsfehlern 15, 16, 17 kleiner ist als der letzte Positionierungsfehler 18 oder als ein mit dem vorgegebenen Skalierungsfaktor skalierter letzter Positionierungsfehler 18.

So wird beispielsweise die zuletzt erfasste erste Position 13 betrachtet. Es wird die Summe aus dem Abstand d zwischen der letzten ersten Position 13 und der letzten Position 14 des Fahrzeuges 1 ermittelt. Dieser Abstand d zwischen der letzten Position 14 zu der letzten ersten Position 13 wird mit dem ersten Positionierungsfehler 17 der zuletzt erfassten erste Position 13 beaufschlagt. Es ergibt sich, dass die Summe aus diesen beiden Abständen geringer ist als der letzte Positionierungsfehler 18. Mit anderen Worten bedeutet dies, dass der durch den letzten ersten Positionierungsfehler 17 definierte Kreis innerhalb des durch den letzten Positionierungsfehler 18 definierten Kreises liegt. In diese Falle wird nicht die letzte Position 14, sondern die zuletzt erfasste erste Position 13 als Abstellposition des Fahrzeuges 1 gewählt.

Es ist ferner ersichtlich, dass für die vor der zuletzt erfassten ersten Position 13 erfassten ersten Positionen 11, 12 die Summe aus deren Abstand zu der letzten Position 14 und ihrem ersten Positionierungsfehler größer ist als der letzte Positionierungsfehler 18. Diese ersten Positionen 11, 12 werden somit nicht als Abstellposition des Fahrzeuges 1 ermittelt. Entsprechend Figur 2 ist dies daher vorteilhaft, da das Fahrzeug 1 sich gemäß der erfassten letzten Position 14 mit sehr hoher Wahrscheinlichkeit innerhalb des durch des letzten Positionierungsfehlers 18 beschriebenen Kreises befindet und somit nicht in den Bereich der anfänglich erfassten ersten Positionen 11, 12 befindlich ist. Da sich auch mehrere erste Positionen innerhalb des durch den letzten Positionierungsfehler 18 definierten Kreis befinden können, ist es vorteilhaft, wenn die Position als Abstellposition des Fahrzeuges 1 ermittelt wird, für die eine Summe aus deren Abstand zu der letzten Position 14 zuzüglich dem zugehörigen ersten Positionierungsfehler 15, 16, 17 der jeweiligen ersten Position 11, 12, 13 am kleinsten ist.

In alternativen Szenarien kann es sich auch ergeben, dass die erfasste letzte Position 14 die Abstellposition des Fahrzeuges 1 am besten beschreibt. Dies ist dann der Fall, wenn für alle gespeicherten ersten Positionen 11, 12, 13 gilt, dass deren Abstand zu der letzten Position 14 zuzüglich des jeweiligen ersten Positionierungsfehlers 15, 16, 17 größer ist als der letzte Positionierungsfehler 18. In diesem Fall wird die erfasste letzte Position 14 als Abstellposition des Fahrzeuges 1 ermittelt.

Neben der obigen schriftlichen Offenbarung wird explizit auf die Offenbarung der Figuren 1 und 2 verwiesen.

**Patentansprüche**

1. Verfahren zum Ermitteln einer Abstellposition eines Fahrzeuges (1), umfassend:

   - Erfassen von ersten Positionen (11, 12, 13) des Fahrzeuges (1) in zeitlich aufeinanderfolgender Reihenfolge durch einen GNSS-Empfänger (2) und Speichern dieser Positionen (11, 12, 13) in einem Speicher (3), wobei für jede der ersten Positionen (11, 12, 13) ein zugehöriger erster Positionierungsfehler (15, 16, 17) hinterlegt wird,
   - Erfassen einer letzten Position (14) des Fahrzeuges (1) mit einem zugehörigen letzten Positionierungsfehler (18) durch den GNSS-Empfänger (2) in Reaktion darauf, dass das Fahrzeug (1) in einen abgestellten Zustand übergeht, und
   - Ermitteln der Abstellposition des Fahrzeuges (1), wobei eine der in dem Speicher gespeicherten ersten Positionen (11, 12, 13) des Fahrzeuges (1) als Abstellposition des Fahrzeuges (1) ermittelt wird, wenn deren Abstand zu der letzten Position (14) zuzüglich dem zugehörigen ersten Positionierungsfehler (15, 16, 17) kleiner als der letzte Positionierungsfehler (18) oder als ein mit einem vorgegebenen Skalierungsfaktor skalierter letzter Positionierungsfehler (18) ist.

2. Verfahren gemäß Anspruch 1, wobei bei dem Ermitteln der Abstellposition des Fahrzeuges (1) die letzte Position (14) als Abstellposition des Fahrzeuges ermittelt wird, wenn für alle gespeicherten ersten Positionen (11, 12, 13) gilt, dass deren Abstand zu der letzten Position (14) zuzüglich des jeweiligen Positionierungsfehlers (15, 16, 17) größer ist als der letzte Positionierungsfehler (18).

3. Verfahren gemäß einem der voranstehenden Ansprüche, wobei diejenige der gespeicherten ersten Positionen (11, 12, 13) des Fahrzeuges (1) als Abstellposition des Fahrzeuges (1) ermittelt wird, für die eine Summe aus deren Abstand zu der letzten Position (14) zuzüglich dem zugehörigen ersten Positionierungsfehler (15, 16, 17) am kleinsten ist.

4. Verfahren gemäß einem der voranstehenden Ansprüche, wobei eine durch den GNSS-Empfänger (2) erfasste Position des Fahrzeuges (1) nur dann als erste Position in einem Speicher (3) gespeichert wird, wenn einer der Position zugehörige Geschwindigkeit des Fahrzeugs geringer als ein vorgegebener Geschwindigkeitsschwellenwert ist, und/oder eine der Position zugehörige Geschwindigkeit des Fahrzeugs (1) geringer als ein Geschwindigkeit, welcher einer zuvor durch den GNSS-Empfänger erfassten Position zugehörig ist.

5. Verfahren gemäß einem der voranstehenden Ansprüche, wobei eine neu erfasste erste Position mit ihrem zugehörigen Positionierungsfehler nicht in dem Speicher (3) gespeichert wird, wenn für alle bis dahin gespeicherten ersten Positionen (11, 12, 13) gilt, dass deren Abstand zu der neu erfassten Position zuzüglich des jeweiligen ersten Positionierungsfehlers (15, 16, 17) der bis dahin gespeicherten ersten Positionen (11, 12, 13) kleiner ist als der letzte Positionierungsfehler der neu erfassten Position.

6. Verfahren gemäß einem der voranstehenden Ansprüche, wobei, falls eine in dem Speicher (3) gespeicherte erste Position (11, 12, 13) durch eine neu erfasste erste Position überschrieben wird, diejenige der gespeicherten ersten Positionen (11, 12, 13) überschrieben wird, für die eine Summe aus deren Abstand zu der neu erfassten ersten Position (14) zuzüglich dem zugehörigen ersten Positionierungsfehler (15, 16, 17) am größten ist.

7. Verfahren gemäß einem der voranstehenden Ansprüche, wobei eine erste Position (11, 12, 13) in dem Speicher (3) nur dann durch eine neu erfasste erste Position überschrieben wird, wenn der Speicher (3) keinen freien Speicherplatz aufweist.

8. Verfahren gemäß einem der voranstehenden Ansprüche, wobei der Skalierungsfaktor insbesondere ein Wert zwischen 0 und 1 ist und/oder der Speicher (3) eine limitierte Anzahl von Speicherplätzen aufweist.

9. Verfahren gemäß einem der voranstehenden Ansprüche, wobei erkannt wird, dass das Fahrzeug (1) in den abgestellten Zustand übergeht, wenn eine Geschwindigkeit des Fahrzeuges auf 0 km/h absinkt, das Fahrzeug (1) deaktiviert wird, eine Betriebskomponente des Fahrzeuges (1) entfernt wird, und/oder wenn detektiert wird, dass über ein vordefiniertes Zeitintervall hinweg eine Geschwindigkeit des Fahrzeuges gleich 0 km/h ist.

10. Vorrichtung zum Ermitteln einer Abstellposition eines Fahrzeuges (1), umfassend eine Steuereinheit, welche dazu eingerichtet ist:

    - erste Positionen (11, 12, 13) des Fahrzeuges (1) in zeitlich aufeinanderfolgender Reihenfolge durch einen GNSS-Empfänger (2) zu erfassen und diese Positionen (11, 12, 13) in einem Speicher (3) zu speichern, wobei für jede der ersten Positionen (11, 12, 13) ein zugehöriger erster Positionierungsfehler (15, 16, 17) hinterlegt wird,
    - eine letzte Position (14) des Fahrzeuges (1) mit einem zugehörigen letzten Positionierungsfehler (18) durch den GNSS-Empfänger (2) in Reaktion darauf zu erfassen, dass das Fahrzeug (1) in einen abgestellten Zustand übergeht, und
    - die Abstellposition des Fahrzeuges (1) zu ermitteln, wobei eine der in dem Speicher gespeicherten ersten Positionen (11, 12, 13) des Fahrzeuges (1) als Abstellposition des Fahrzeuges (1) ermittelt wird, wenn deren Abstand zu der letzten Position (14) zuzüglich dem zugehörigen ersten Positionierungsfehler (15, 16, 17) kleiner als der letzte Positionierungsfehler (18) oder als ein mit einem vorgegebenen Skalierungsfaktor skalierter letzter Positionierungsfehler (18) ist.

Fig. 1

**Fig. 2**

Europäisches
Patentamt
European
Patent Office
Office européen
des brevets

**EUROPÄISCHER RECHERCHENBERICHT**

Nummer der Anmeldung

**EP 23 16 9488**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2012 202750 A (TOYOTA MOTOR CORP) 22. Oktober 2012 (2012-10-22) <br> * Seite 3, Absatz 1 - Seite 8, Absatz 36 * <br> * Abbildungen 1-4 * <br> * Zusammenfassung * <br> ----- | 1-10 | INV. <br> G01S19/39 <br> G01C21/00 |
| A | ETEMAD MOHAMMAD ET AL: "Wise Sliding Window Segmentation: A Classification-Aided Approach for Trajectory Segmentation", 24. Februar 2020 (2020-02-24), TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 208 - 219, XP047550805, <br> * Seite 5, Absatz 4 The proposed method - Seite 8, Absatz 5 Experimental evaluation * <br> * Abbildungen 2, 3 * <br> * Zusammenfassung * <br> ----- | 1-10 | |
| A | Wick Reto: "Unsicherheiten und Positionsfehler von GPS-Trajektorien", , 30. September 2013 (2013-09-30), Seiten 1-104, XP093083680, Gefunden im Internet: URL:https://uzb.swisscovery.slsp.ch/discovery/delivery/41SLSP_UZB:UZB/12464796360005508 [gefunden am 2023-09-20] <br> * Seite 61, Absatz 6 Trip-Sementierung - Seite 80 * <br> * Abbildungen 26-35 * <br> * Zusammenfassung * <br> ----- | 1-10 | **RECHERCHIERTE SACHGEBIETE (IPC)** <br><br> G01S <br> G01C |

Der vorliegende Recherchenbericht wurde für alle Patentansprüche erstellt

| Recherchenort | Abschlußdatum der Recherche | Prüfer |
|---|---|---|
| München | 20. September 2023 | von Walter, Sven-Uwe |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 16 9488

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2023

| Im Recherchenbericht angeführtes Patentdokument | Datum der Veröffentlichung | Mitglied(er) der Patentfamilie | Datum der Veröffentlichung |
|---|---|---|---|
| JP 2012202750 A | 22-10-2012 | KEINE | |

Für nähere Einzelheiten zu diesem Anhang : siehe Amtsblatt des Europäischen Patentamts, Nr.12/82

EPO FORM P0461